**Europäisches Patentamt**

**European Patent Office**

**Office européen des brevets**

(19)

(11) **EP 1 526 437 A1**

(12) **EUROPEAN PATENT APPLICATION**

(43) Date of publication:
**27.04.2005 Bulletin 2005/17**

(51) Int Cl.⁷: $G06F\ 1/26$

(21) Application number: **03024242.4**

(22) Date of filing: **22.10.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Sony Ericsson Mobile
Communications AB
221 88 Lund (SE)**

(72) Inventor: **Lutnaes, Sturla
756 43 Uppsala (SE)**

(74) Representative: **Dahnér, Christer et al
Valea AB
Box 7086
103 87 Stockholm (SE)**

(54) **Power consumption determination**

(57)    The present invention relates to a method of determining the energy consumption for at least parts of a hardware component, such a hardware component, a method of determining the power consumption of a portable electronic device, such a portable electronic device as well as a power consumption calculating device (32). The portable electronic device comprises hardware components (20, 22, 24) having an energy consumption determining unit that counts clock signals (CLK2) during a time period and calculates a power value (P1) based on the clock signals and a further value, which further value has been set depending on the supply voltage (V) to and the capacitance of at least a part of the hardware component. The device further includes a power consumption calculating device (32) that receives power values (P1, P2, P3) from the hardware components and determines a total power consumption by adding together all these received power values.

FIG. 2

**Description**

TECHNICAL FIELD OF THE INVENTION

The present invention relates to the field of determining the power consumption of components, preferably in portable electronic devices and more particularly to a method of determining the energy consumption for at least parts of a hardware component, such a hardware component, a method of determining the power consumption of a portable electronic device, such a portable electronic device as well as a power consumption calculating device.

DESCRIPTION OF RELATED ART

Portable electronic devices are becoming more and more popular and widespread. At the same time there is a trend towards having more and more functions and applications in them, which leads to these devices including a lot of different components. It is furthermore essential to keep track of the energy consumed in the device in order to allow a user to replace or to recharge the batteries used for powering the device in a timely fashion.
One way to measure the energy consumption is to place a small resistor in series with the load (i.e. all the components of the device). The current running through this resistor is therefore measured and thus the energy consumed can be calculated. When many components are provided for a number of different functionalities, which can be working simultaneously, there is a risk that the current running through the resistor is very high and that the consequential voltage drop over the resistor is so high that the life of the battery is shortened.
Another way of keeping track of the energy consumption is through the use of the central processing unit of the device. The central processing unit can control the provision of clock signals to the different components. In doing this it is at the same time possible to estimate the power consumption for each component each time a clock signal is supplied to the component in question. The models used for estimating consumption can be simple and just give a rough estimation, in which case they are not that reliable but occupy little processing power of the central processing unit. They can be more complex and in this case they are more reliable but occupy more processing power of the central processing unit. When this is done the central processing unit is hindered from or slowed down in the performance of more essential tasks like running different types of applications. The processing power of a central processing unit is thus a bottleneck in portable electronic devices and will become more so in the future with the provision of more different types of components, applications and functionalities.
There is therefore a need for being able to provide a good and reliable way of determining the power consumption of components in portable electronic devices without having to unnecessarily use the capacity of the central processing unit for determining the energy consumption of each component.

SUMMARY OF THE INVENTION

The present invention is thus directed towards solving the problem of providing a good and reliable way of determining the power consumption of hardware components in portable electronic devices without having to unnecessarily use the capacity of the central processing unit for determining the energy consumption of each component.
This is achieved by the hardware components receiving a number of clock signals from an external clocking unit during a time period, counting the number of clock signals received during said time period, and calculating a power value based on the counted number of clock signals and at least one further value, which further value has been set depending on the supply voltage to and the capacitance of at least a part of the hardware component, such that the energy consumption of the hardware component can be determined locally.
One object of the present invention is to provide a method that provides a good and reliable way of determining the power consumption of a hardware component for a portable electronic device without having to unnecessarily use the capacity of the central processing unit of the portable electronic device for determining the energy consumption of the component.
According to a first aspect of the present invention, the object is achieved by a method of determining the energy consumption for at least parts of a hardware component in the hardware component, which hardware component is arranged for provision in a portable electronic device, and comprising the steps of:

receiving a number of clock signals from an external clocking unit during a time period,
counting the number of clock signals received during said time period, and
calculating a power value based on the counted number of clock signals and at least one further value, which further value has been set depending on the supply voltage to and the capacitance of at least a part of the hardware component, such that the energy consumption of the hardware component can be determined locally.

A second aspect of the present invention is directed to a method including the features of the first aspect, wherein the step of calculating comprises multiplying the number of clock signals with said further value.
A third aspect of the present invention is directed towards a method including the features of the first aspect, wherein the step of calculating comprises adding together a number of said at least one further value to each other corresponding to the counted number of clock signals.

A fourth aspect of the present invention is directed towards a method including the features of the first aspect, wherein the steps of counting and calculating are performed in an energy consumption determining unit and further comprising the step of receiving a clock enabling signal in the energy consumption determining unit from an activity function unit of the hardware component.

A fifth aspect of the present invention is directed towards a method including the features of the fourth aspect, wherein the clock enabling signal is used for starting and stopping the calculation of a power value in the energy consumption determining unit.

A sixth aspect of the present invention is directed towards a method including the features of the first aspect, wherein the steps of receiving, counting and calculating are performed separately for at least two parts of the hardware device for calculating power value contributions from each part and further comprising the step of adding the power value contributions together, for forming a power value for the whole hardware unit.

A seventh aspect of the present invention is directed towards a method including the features of the first aspect, further comprising the step of supplying the power value to a power consumption calculating device.

An eighth aspect of the present invention is directed towards a method including the features of the first aspect, wherein there is only one further value used in each step of calculating.

A ninth aspect of the present invention is directed towards a method including the features of the first aspect, wherein there is more than one further value and the step of calculating comprises using a first further value for a first part of the clock signals and using a second further value for a second part of the clock signals.

A tenth aspect of the present invention is directed towards a method including the features of the ninth aspect, wherein there is more than one further value for each step of calculating because of a changed supply voltage to at least said part of the hardware unit.

An eleventh aspect of the present invention is directed towards a method including the features of the ninth aspect, wherein there is more than one further value for each step of calculating because of a varied capacitance of at least said part of the hardware unit.

Another object of the present invention is to provide a method that allows providing a good and reliable way of determining the power consumption of hardware components in portable electronic devices without having to unnecessarily use the capacity of the central processing unit of the portable electronic device for determining the energy consumption of the components.

According to a twelfth aspect of the present invention, this object is achieved by a method of determining the power consumption of a portable electronic device comprising a number of hardware components comprising the steps of:

> receiving power values from the hardware components, where each power value has been calculated based on a counted number of clock signals received by the corresponding hardware component during a time period and at least one further value, which further value has been set depending on the supply voltage to and the capacitance of at least a part of corresponding hardware component, and determining a total power consumption by adding together all these received power values.

Yet another object is to provide a hardware component for use in a portable electronic device that provides a good and reliable way of determining the power consumption of the hardware component without having to unnecessarily use the capacity of the central processing unit of the portable electronic device for determining the energy consumption of each component.

According to a thirteenth aspect of the present invention, this object is achieved by a hardware component comprising:

> at least one energy consumption determining unit comprising:
>
>> a timer arranged to count a number of clock signals received from an external clocking unit during a time period, a calculating unit arranged to calculate a power value based on the number of clock signals and a further value, which further value has been set depending on the supply voltage to and the capacitance of at least a part of the hardware component, such that the energy consumption of the hardware component can be determined locally.

A fourteenth aspect of the present invention is directed towards a hardware component including the features of the thirteenth aspect, wherein the calculating unit comprises a multiplier arranged to multiply the number of clock signals with said further value.

A fifteenth aspect of the present invention is directed towards a hardware component including the features of the thirteenth aspect, wherein the calculating unit comprises an adding unit arranged to add together a number of said at least one further value to each other corresponding to the counted number of clock signals.

A sixteenth aspect of the present invention is directed towards a hardware component including the features of the thirteenth aspect, further comprising an activity function unit arranged to generate a clock enabling signal, which clock enabling signal is supplied to the energy consumption determining unit for starting and stopping the calculation of a power value in the energy consumption determining unit.

A seventeenth aspect of the present invention is directed towards a hardware component including the features of the thirteenth aspect, where there is more than one energy consumption determining unit and further comprising a power consumption calculating unit arranged to receive a power value contribution from each energy consumption determining unit and add the power value contributions together for forming a power value for the whole hardware component.

An eighteenth aspect of the present invention is directed towards a hardware component including the features of the thirteenth aspect, wherein the energy consumption determining unit further comprises a value store in which said at least one further value is stored.

A nineteenth aspect of the present invention is directed towards a hardware component including the features of the thirteenth aspect, wherein there is only one further value used in each calculating unit.

A twentieth aspect of the present invention is directed towards a hardware component including the features of the thirteenth aspect, wherein there is more than one further value and each calculating unit is arranged to use a first further value for a first part of the clock signals and to use a second further value for a second part of the clock signals.

A twenty-first aspect of the present invention is directed towards a hardware component including the features of the twentieth aspect, wherein there is more than one further value used in each calculating unit because of a changed supply voltage to at least said part of the hardware unit.

A twenty-second aspect of the present invention is directed towards a hardware component including the features of the twentieth aspect, wherein there is more than one further value used in each calculating unit because of a varied capacitance of at least said part of the hardware unit.

Yet another object is to provide a power consumption calculating device for use in a portable electronic device that allows providing a good and reliable way of determining the power consumption of hardware components in portable electronic devices without having to unnecessarily use the capacity of the central processing unit of the portable electronic device for determining the energy consumption of the components.

According to a twenty-third aspect of the present invention, this object is achieved by power consumption calculating device arranged to receive power values from a number of hardware components, where each power value has been calculated based on a counted number of clock signals received by the corresponding hardware component during a time period and at least one further value, which further value has been set depending on the supply voltage to and the capacitance of at least a part of corresponding hardware component, and comprising:

> an adding unit arranged to determine a total power consumption by adding together all these received power values.

Yet another object is to provide a portable electronic device that provides a good and reliable way of determining the power consumption of included hardware components without having to unnecessarily use the capacity of the central processing unit of the portable electronic device for this determination.

According to a twenty-fourth aspect of the present invention, this object is achieved by a portable electronic device comprising:

> a clocking unit, and
> at least one hardware component comprising:
>
>> at least one energy consumption determining unit comprising:
>>
>>> a timer arranged to count a number of clock signals received from the clocking unit during a time period,
>>> a calculating unit arranged to calculate a power value based on the number of clock signals and a further value, which further value has been set depending on the supply voltage to and the capacitance of at least a part of the hardware component, such that the energy consumption of the hardware component can be determined.

A twenty-fifth aspect of the present invention is directed towards a portable electronic device including the features of the twenty-fourth aspect, wherein there are more than one hardware components and further comprising:

> a power consumption calculating device arranged to receive power values from a number of hardware components and comprising:
>
>> an adding unit arranged to determine a total power consumption by adding together all these received power values.

A twenty-sixth aspect of the present invention is directed towards a portable electronic device including the features of the twenty-fourth aspect, wherein the device is a cellular phone.

The invention has the following advantages. It allows a safe and accurate calculation of the power consumption of hardware components in a portable electronic device without unduly burdening the central processing unit, which is of great advantage when the number of hardware components is high. The power efficiency is also higher since the hardware components control their own clocks. There is furthermore no need for a complex control mechanisms in the central processing unit for tracking the use or control system clocking.

It should be emphasized that the term "comprises/comprising" when used in this specification is taken to specify the presence of stated features, integers, steps or components, but does not preclude the presence or addition of one or more other features, integers, steps, components or groups thereof.

BRIEF DESCRIPTION OF THE DRAWINGS

The present invention will now be described in more detail in relation to the enclosed drawings, in which:

> fig. 1 shows a block schematic of a portable electronic device according to the invention including a battery and a main unit,
> fig. 2 shows a block schematic of the main unit in the portable communication device according to the invention,
> fig. 3 shows a block schematic of a hardware component according to a first embodiment of the present invention included in the main unit of the portable electronic device in fig. 2, fig. 4 shows a flow chart of a method of determining energy consumption in the hardware component in fig. 3,
> fig. 5 shows a block schematic of a hardware component according to a second embodiment of the present invention,
> fig. 6 shows a block schematic of a power consumption calculating device according to the invention,
> fig. 7 shows a flow chart of a method of determining power consumption according to the invention that the device in fig. 6 is working according to, and
> fig. 8 shows a block schematic of an alternative energy consumption determination unit.

DETAILED DESCRIPTION OF EMBODIMENTS

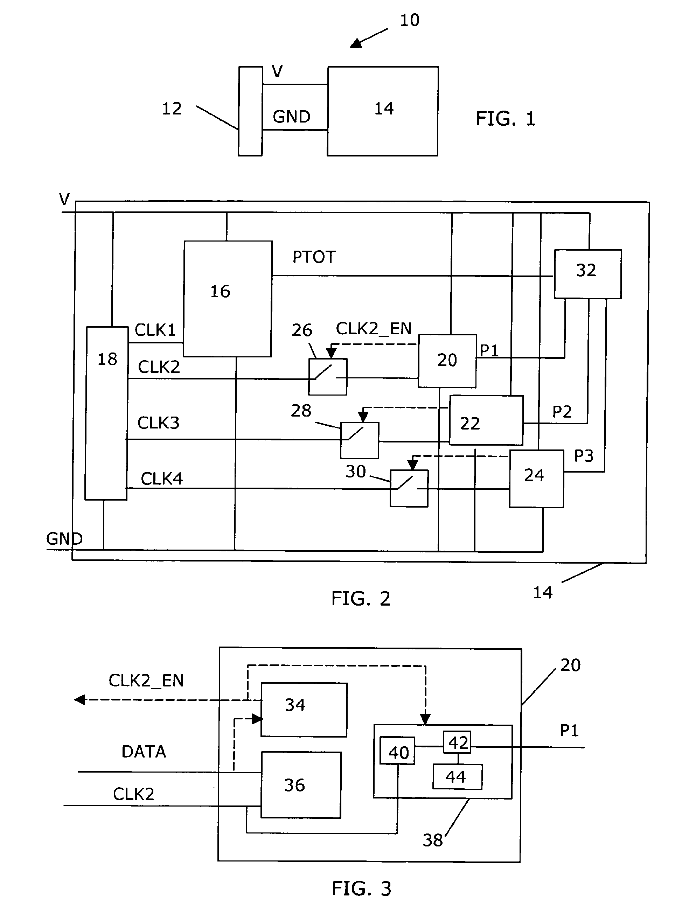

A portable electronic device 10 according to the present invention is shown in a block schematic in fig. 1. The device includes a battery 12, which feeds a main unit 14. The battery therefore supplies the main unit 14 with a potential V and ground GND. The portable electronic device is in a preferred embodiment of the present invention a cellular phone. It should however be realised that the invention is not limited to such a device but can be any other type of portable electronic device such as a lap top computer, a palm top computer an organizer, a smartphone or perhaps a gaming machine. The battery is furthermore here shown as a part of the device, which is normal practice for cellular phones. It should also be realised that the battery need not be a part of the device, but can be one or more batteries, that a user has to purchase separately and connect to the device himself.

Fig. 2 shows a block schematic of the main unit 14 of the invention, which main unit 14 includes a circuit board on which a number of components are placed. The main unit can also be an ASIC comprising function blocks corresponding to the components. On the board a central processing unit 16 is placed. The board furthermore includes a clocking unit or a clock generating unit 18 in the form of a PLL circuit (phase locked loop), which generates four different clock signals CLK1, CLK2, CLK3 and CLK4, of which a first CLK1 is supplied to the central processing unit 16. A second of the clock signals CLK2 is supplied to a first switch 26, which first switch 26 is connected to a first hardware component 20 according to the invention. A third of the clock signals CLK3 is supplied to a second switch 28, which second switch is connected to a second hardware component 22 according to the invention. A fourth of the clock signals CLK4 is supplied to a third switch 30, which third switch is connected to a third hardware component 24 according to the invention. The first, second and third hardware components 22, 24 and 24 are connected to a power consumption calculating device 32, which in turn is connected to the central processing unit 16. The first, second and third hardware components 22, 24 and 24 all generate control signals, which are indicated with dashed arrows and are applied on the first second and third switches respectively. The central processing unit 16, the PLL circuit 18, the first, second and third hardware components 22, 24 and 24 and the power consumption calculating device 32 are all connected between the feeding voltage and ground in order to receive power. It should be realised that some or all of them might receive a divided down voltage instead of the voltage V, all depending on application. The man skilled in the art however easily achieves dividing of voltages using for instance resistors. It should also be realised that the switches might be receiving feed voltages as well. This has however not been shown in order to provide a better understanding of the principles of the invention. The clock signals can also be applied using different clock cycles. One other thing that has been omitted in the drawing is a data bus, which is used for communication between the different components or circuits. This has been omitted for the same reasons that are stated above, i.e. in order to provide a better understanding of the invention. How data communication over a data bus can take place is however known and can be performed for instance according to what is explained in European patent application EP03019882.4, which is herein incorporated by reference.

A first hardware component 20 according to a first embodiment of the invention is shown in a block schematic in fig. 3. The hardware component 20, which in this embodiment is an ASIC circuit or a functional block in an ASIC circuit and can be an DART (Universal Asynchronous Receiver Transmitter) component includes an activity function unit 34, which is arranged to sense activity associated with the device on the data bus or on the serial line P1, i.e. senses that there is incoming data addressed to the device and generates a clock enabling signal CLK2_EN in dependence of this activity, which it emits to the first switch of fig. 2 but also supplies to an energy consumption determining unit 38 inside the hardware component 20. These control signals are in the figure indicated with dashed lines. The activity function unit 34 can also generate a clock enabling signal if the hardware component is to receive data or do some processing by its own initiative based on some external event. The hardware component 20 also includes a local processing unit 36, which receives the data and the clock signal CLK2 and performs various types of processing. The clock signal CLK2 is then also supplied to the energy consumption determining unit 38. The energy consumption determining unit 38 thus receives clock signals CLK2 and the clock enabling signal CLK2_EN. The energy consumption determining unit 38 more particularly comprises a timer 40, which receives the clock signal CLK2. The timer 40 is connected to a calculating unit comprising a multiplier 42, which multiplier 42 is connected to a value store 44. The multiplier 42 outputs a power value P1 to the power consumption calculating device in fig. 2.

The functioning of the unit in fig. 3 will shortly be described, but first some basic explanations will be given regarding the calculation of energy consumption.

Power consumption of a hardware component is generally calculated according to the formula:

$$P = f * c * v^2 \qquad (1),$$

where P is the power, f is the clock frequency, v the feeding voltage of the device and c the capacitance of the component, which is determined by the number of and the configuration of transistors and other elements inside the component. The capacitance can be calculated and/or measured for the component. In the first embodiment of the invention the feeding voltage and the capacitance are both constant and are not to be changed, which means that $c * v^2$ can be replaced by a constant value K. This means that a second formula can be used for determining the power consumption of a component, which formula is the following:

$$P = n * K \qquad (2),$$

where n is the number of clock signals received and the value K depends on voltage and capacitance of the component. The value K, which is thus depending on the supply voltage to and the capacitance of the hardware component, can be provided in the hardware component beforehand and then be hardware coded in the component or downloaded at start of the system after measuring the applied voltages.

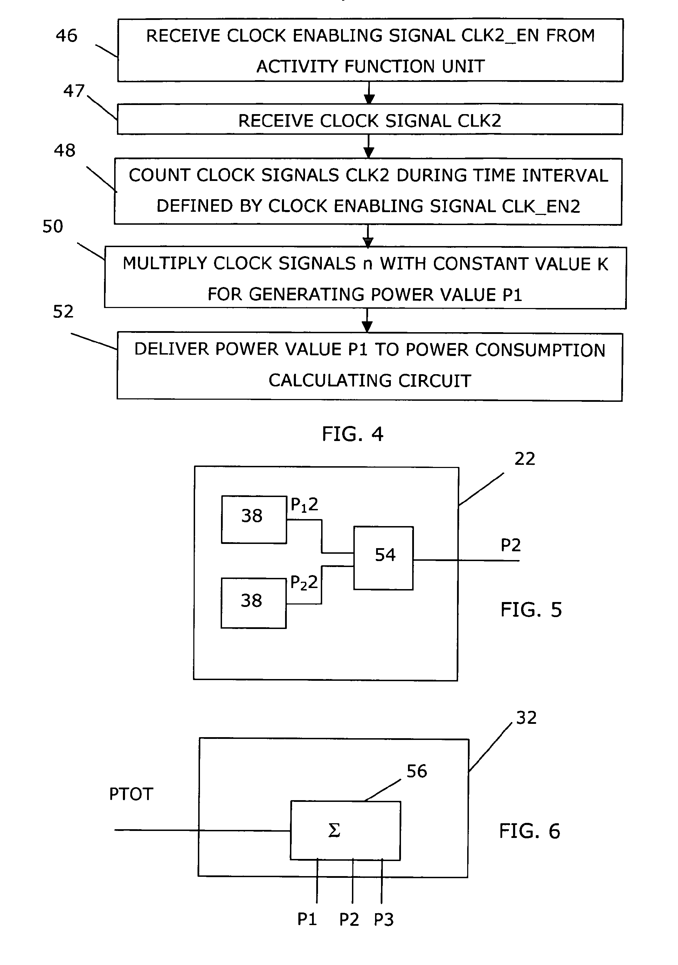

Now the functioning of the device in fig. 3 will be described also with reference being made to fig. 4, which shows a flow chart of a method according to which the device work as well as to the earlier described fig 2.

As long as no clock signals are received in the hardware component 20 there is no real energy consumption. When for instance data is received, the activity function unit 34 generates a clock enabling signal CLK2_EN, which is supplied to the first switch 26. This enabling signal makes the first switch 26 change positions from an open to a closed state such that the clock signal CLK2 from the PLL circuit 18 is received in the hardware component 20. The enabling signal CLK2_EN is also received by the energy consumption determining unit 38, step 46. The enabling signal CLK2_EN, which preferably is a high voltage level applied as long as clock signals are to be received, then activates the timer 40 such that it can start counting received clock signals or pulses CLK2. When the clock signals are received, step 47, the timer 40 thus counts the clock signals CLK2 during the time interval when the clock enabling signal goes high, step 48. Thereafter the multiplier 42 fetches the above-mentioned constant value K from the store 44 and multiplies it with the number n of clock cycles counted by the timer 40 in order to generate a power value P1, step 50. Thereafter the power value is delivered from the multiplier 42 to the power consumption calculating device 32. In this way the power consumption of the hardware component is calculated locally without the central processing unit 16 having to take part in the calculation. This relives it, such that it can be used for better purposes.

The hardware component 20 might as an alternative receive different clocking signals depending on the urgency of the processing in question or for other reasons, like for saving energy. This is however no problem for the energy consumption determining unit since it only counts clock cycles during a time interval and therefore the different clocking frequencies are automatically considered when calculating the power consumption.

It should be realised that the way a power value was calculated above was a mere example. There are a number of different ways in which the calculation can be performed. One possible variation is that constant values K are added together each time a clocking signal is received and that this sum of values K then provides the power value P1.

Another embodiment of a hardware component, which is exemplified by the second hardware component 22, will now be explained with reference being made to fig. 5, which shows a block schematic of that device. It should be understood that this device also has two local processing units and an activity determination unit. These are however omitted here, since they have already been described. In this case there are two energy consumption determining units 38 provided, each being active for different parts of the hardware component and activated in similar fashion as the energy consumption determining unit of fig. 3 and thus provide a first and a second power value contribution $P_12$ and $P_22$. This is the case when different parts of the second hardware component is active during different times, which can be the case for instance for a circuit having a transmission and a reception side. In this case the activity determination unit (not shown) can influence two different switches for supply of two different clock signals or the one clock signal selectively be supplied to either a first, a second or to both local processing units of the device. The device furthermore includes a local power consumption calculating unit 54, in the form of an adder, which adds together the power value contributions $P_12$ and $P_22$ from the two energy consumption determination units 38 in order to form a power value P2 for supply to the power consumption calculating device 32 in fig. 2. Of course here there can be two separate values K used for each half of the component.

It should be realised that there can be more such energy consumption determination units and corresponding power value contributions in the hardware component than what has been described here all depending on how finely processing can be divided between different parts of the hardware component. It should also be realised that the different parts might receive different clocking signals.

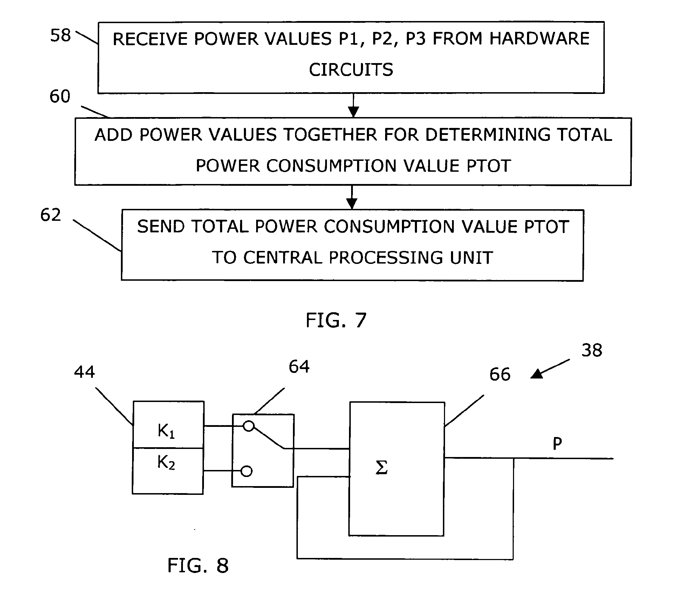

With reference being yet again made to fig. 2, the power values P1, P2 and P3 from all the different hardware components 20, 22, and 24 are supplied to the power consumption calculating device 32. Here the power value of the third hardware component 24 is calculated along one of the ways that have been described previously. The functioning of this device will now be described in more detail with reference being made also to fig. 6, which shows a block schematic of the device including a summing unit 56, which is connected to the hardware components 20, 22 and 24 for receiving the power values and is also connected to the central processing unit 16. The functioning of this device 32 will furthermore be explained with reference also being made to fig. 7, which shows a flow chart of a method this device is working according to.

The device 32 thus receives the power values P1, P2, P3 from the different hardware components 20, 22, 24 in the summing unit 56, step 58. These power values are then added together for determining the total power consumption PTOT of the whole portable electronic device, step 60. The total power consumption value PTOT is then sent to the central processing unit 16, step 62. In this way the central processing unit can present the power consumption of the whole device to the user for instance via a display as well as performs or orders the performing of other processes based on it.

The collection of power values can be performed by polling the different hardware components at fixed time intervals from the central processing unit. The timers can also be reset when for instance a battery is fully loaded. It should also be realised that the power consumption calculating device need not be a component of its own, but can be a part of the central processing unit as well.

In the embodiments given above the voltages supplied were constant. This is not necessarily the case for all types of circuits. The feeding voltages can in some instances be lowered in order to reduce power consumption. What can be done then is that the central processing unit reduces the feeding voltage to the component in question. In this case the value K given above is not constant anymore, but is varying. Then the central processing unit can redefine the K-value when the voltage is changed. It is also possible to store different K-values in the value store of the energy consumption determining unit, where different values are supplied to the multiplier at different instances. An energy consumption determining unit for performing this is shown in a block schematic in fig. 8. Here the calculating unit includes an adding unit 66 connected to the value store 44 via a switch 64, where the value store 44 includes a first value $K_1$ for a first voltage level and a second value $K_2$ for a second voltage level. The unit is clocked by the clock signal such that for for instance a first number of cycles the value store 44 outputs a number of values having the first value $K_1$, which are added together until the voltage is changed, whereupon the switch 64 is connected so that the second value $K_2$ is output from the value store so that a number of values having the second value are added together during a second number of cycles. The varied values can as an alternative be provided through the first K-value being multiplied with a counter value for a first number of cycles and for another number of cycles a second K-value is multiplied with said another number of cycles etc.

It is furthermore possible that the hardware component itself can select voltage level. In this case the circuit would include a voltage level selector that for instance senses the frequency of data arriving at the hardware component and selects different voltage levels accordingly. This voltage level selector would then also provide a voltage selection signal to the energy consumption determination unit for selecting a corresponding K-value, which would then be done independently of the central processing unit. By lowering the supply voltage considerable energy saving is achieved.

In addition to this, it is also possible to vary the capacitance of the hardware component, which can be done by biasing the transistors of the component through changing their threshold voltages, which give rise to the changed capacitance. The change can be obtained using the same principles that were used for changing voltages, i.e. either under the control of the central processing unit or through an internal transistor threshold level selector of the hardware component, where both would provide control signals to the energy consumption determining unit for selecting appropriate K-values.

In the description given above, the hardware components turned on and off the clock signals independently of the central processing unit. It should be realised that it is equally as well possible that the central processing unit does this, in which case this central processing unit would provide the control signal for starting counting clock cycles. In view of this the present invention is therefore only to be limited by the following claims.

The present invention has many advantages. It allows a safe and accurate calculation of the power consumption of hardware components in a portable electronic device without unduly burdening the central processing unit, which is of great advantage when the number of hardware components is high. The power efficiency is also higher since the hardware components control their own clocks. There is furthermore no need for a complex control mechanisms in the central processing unit for tracking the use or control system clocking.

## Claims

1. Method of determining the energy consumption for at least parts of a hardware component (20) in the hardware component, which hardware component is arranged for provision in a portable electronic device (10), and comprising the steps of:

   receiving a number of clock signals (CLK2) from an external clocking unit (18) during a time period, (step 47),
   counting the number of clock signals received during said time period, (step 48), and
   calculating a power value (P1) based on the counted number of clock signals and at least one further value, (step 50), which further value has been set depending on the supply voltage (V) to and the capacitance of at least a part of the hardware component, such that the energy consumption of the hardware component can be determined locally.

2. Method according to claim 1, wherein the step of calculating comprises multiplying the number of clock signals with said further value.

3. Method according to claim 1, wherein the step of calculating comprises adding together a number of said at least one further value to each other corresponding to the counted number of clock signals.

4. Method according to any previous claim, wherein the steps of counting and calculating are performed in an energy consumption determining unit (38) and further comprising the step of receiving a clock enabling signal (CLK2_EN) in the energy consumption determining unit from an activity function unit (34) of the hardware component, (step 46).

5. Method according to claim 4, wherein the clock enabling signal is used for starting and stopping the calculation of a power value in the energy consumption determining unit.

6. Method according to any previous claim, wherein the steps of receiving, counting and calculating are performed separately for at least two parts of the hardware device for calculating power value contributions from each part and further comprising the step of adding the power value contributions together, for forming a power value for the whole hardware unit.

7. Method according to any previous claim, further comprising the step of supplying the power value to a power consumption calculating device (32), (step 52).

8. Method according to any previous claim, wherein there is only one further value used in each step of calculating.

9. Method according any of claims 1 - 7, wherein there is more than one further value and the step of calculating comprises using a first further value for a first part of the clock signals and using a second further value for a second part of the clock signals.

10. Method according to claim 9, wherein there is more than one further value for each step of calculating because of a changed supply voltage to at least said part of the hardware unit.

11. Method according to claim 9 or 10, wherein there is more than one further value for each step of calculating because of a varied capacitance of at least said part of the hardware unit.

12. Method of determining the power consumption of a portable electronic device (10) comprising a number of hardware components (20, 22, 24) comprising the steps of:

   receiving power values (P1, P2, P3) from the hardware components (20, 22, 24), where each power value has been calculated based on a counted number of clock signals received by the corresponding hardware component during a time period and at least one further value, which further value has been set depending on the supply voltage to and the capacitance of at least a part of corresponding hardware component, and
   determining a total power consumption (PTOT) by adding together all these received power values, (step 60).

13. Hardware component (20; 22) comprising:

   at least one energy consumption determining unit (38) comprising:

   a timer (40) arranged to count a number of clock signals (CLK2) received from an external clocking unit (18) during a time period,
   a calculating unit (42; 66) arranged to calculate a power value (P1; P2) based on the number of clock signals and a further value ($K_1$, $K_2$), which further value has been set depending on the supply voltage (V) to and the capacitance of at least a part of the hardware component, such that the energy consumption of the hardware component can be determined locally.

14. Hardware component according to claim 13, wherein the calculating unit comprises a multiplier (42) arranged to multiply the number of clock signals with said further value.

15. Hardware component according to claim 13, wherein the calculating unit comprises an adding unit (66) arranged to add together a number of said at least one further value to each other corresponding to the counted number of clock signals.

16. Hardware component according to any of claims 13 - 15, further comprising an activity function unit (34) arranged to generate a clock enabling signal (CLK2_EN), which clock enabling signal is supplied to the energy consumption determining unit for starting and stopping the calculation of a power value in the energy consumption determining unit.

17. Hardware component according to any of claims 13 - 17, where there is more than one energy consumption determining unit and further comprising a power consumption calculating unit (54) arranged to receive a power value contribution ($P_1 2$, $P_2 2$) from each energy consumption determining unit and add the power value contributions together for forming a power value for the whole hardware component.

18. Hardware component according to any of claims 13 - 17, wherein the energy consumption determining unit further comprises a value store (44) in which said at least one further value is stored.

19. Hardware component according to any of claims 13 - 18, wherein there is only one further value used in each calculating unit.

20. Hardware component according to any of claims 13 - 18, wherein there is more than one further value ($K_1$, $K_2$) and each calculating unit is arranged to use a first further value ($K_1$) for a first part of the clock signals and to use a second further value ($K_2$) for a second part of the clock signals.

21. Hardware component according to claim 20, wherein there is more than one further value used in each calculating unit because of a changed supply voltage to at least said part of the hardware unit.

22. Hardware component according to claim 20 or 21, wherein there is more than one further value used in each calculating unit because of a varied capacitance of at least said part of the hardware unit.

23. Power consumption calculating device (32) arranged to receive power values (P1, P2, P3) from a number of hardware components (20, 22, 24), where each power value has been calculated based on a counted number of clock signals received by the corresponding hardware component during a time period and at least one further value, which further value has been set depending on the supply voltage to and the capacitance of at least a part of corresponding hardware component, and comprising:

   an adding unit (56) arranged to determine a total power consumption by adding together all these received power values.

24. Portable electronic device comprising:

   a clocking unit (18), and
   at least one hardware component (20, 22, 24) comprising:

   at least one energy consumption determining unit (38) comprising:

   a timer (40) arranged to count a number of clock signals received from the clocking unit during a time period, a calculating unit (42; 66) arranged to calculate a power value (P1) based on the number of clock signals and a further value, which further value has been set depending on the supply voltage (V) to and the capacitance of at least a part of the hardware component, such that the energy consumption of the hardware component can be determined.

25. Portable electronic device (10) according to claim 24, wherein there are more than one hardware components and further comprising:

a power consumption calculating device (32) arranged to receive power values from a number of hardware components and comprising:

an adding unit (56) arranged to determine a total power consumption by adding together all these received power values.

26. Portable electronic device according to claim 24 or 25, wherein the device is a cellular phone.

FIG. 1

FIG. 2

FIG. 3

46 RECEIVE CLOCK ENABLING SIGNAL CLK2_EN FROM ACTIVITY FUNCTION UNIT

47 RECEIVE CLOCK SIGNAL CLK2

48 COUNT CLOCK SIGNALS CLK2 DURING TIME INTERVAL DEFINED BY CLOCK ENABLING SIGNAL CLK_EN2

50 MULTIPLY CLOCK SIGNALS n WITH CONSTANT VALUE K FOR GENERATING POWER VALUE P1

52 DELIVER POWER VALUE P1 TO POWER CONSUMPTION CALCULATING CIRCUIT

FIG. 4

FIG. 5

FIG. 6

58 | RECEIVE POWER VALUES P1, P2, P3 FROM HARDWARE CIRCUITS

60 | ADD POWER VALUES TOGETHER FOR DETERMINING TOTAL POWER CONSUMPTION VALUE PTOT

62 | SEND TOTAL POWER CONSUMPTION VALUE PTOT TO CENTRAL PROCESSING UNIT

FIG. 7

FIG. 8

**European Patent Office**

## EUROPEAN SEARCH REPORT

Application Number

EP 03 02 4242

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 6 000 036 A (DURHAM CHRISTOPHER MCCALL ET AL) 7 December 1999 (1999-12-07) | 1,13 | G06F1/26 |
| X | * column 3, line 17 - column 4, line 11 * | 12,23-26 | |
| A | * column 5, line 34 - line 47 * * column 5, line 64 - line 67; figures 1,2 * | 6,7,17 | |
| | --- | | |
| Y | US 5 938 755 A (YASTROW PHILIP G) 17 August 1999 (1999-08-17) * column 2, line 1 - line 29; figure 1 * | 1,13 | |
| | --- | | |
| A | US 2003/125900 A1 (RONEN RONNY ET AL) 3 July 2003 (2003-07-03) * paragraph [0026]; figures 1,2 * | 8-10, 19-21 | |
| | --- | | |
| A | US 2002/029352 A1 (DE VIVEK K ET AL) 7 March 2002 (2002-03-07) * paragraph [0036] - paragraph [0040]; figure 2 * | 11,22 | |
| | --- | | |
| A | TSCHANZ J ET AL: "Dynamic-sleep transistor and body bias for active leakage power control of microprocessors" , PAGE(S) 1-10 XP010661366 * the whole document * | 11,22 | TECHNICAL FIELDS SEARCHED (Int.Cl.7)<br><br>G06F |
| | ----- | | |

The present search report has been drawn up for all claims

| Place of search | Date of completion of the search | Examiner |
|---|---|---|
| BERLIN | 27 April 2004 | Mouton, B |

EPO FORM 1503 03.82 (P04C01)

**ANNEX TO THE EUROPEAN SEARCH REPORT
ON EUROPEAN PATENT APPLICATION NO.**

EP 03 02 4242

This annex lists the patent family members relating to the patent documents cited in  the above-mentioned European search report.
The members are as contained in the European Patent Office EDP file on
The European Patent Office is in no way liable for these particulars which are merely  given for the purpose of information.

27-04-2004

| Patent document cited in search report | | Publication date | Patent family member(s) | | Publication date |
|---|---|---|---|---|---|
| US 6000036 | A | 07-12-1999 | JP<br>JP<br>KR<br>US | 3026776 B2<br>10069330 A<br>267429 B1<br>5981109 A | 27-03-2000<br>10-03-1998<br>01-11-2000<br>09-11-1999 |
| US 5938755 | A | 17-08-1999 | JP | 5256916 A | 08-10-1993 |
| US 2003125900 | A1 | 03-07-2003 | GB<br>WO | 2393008 A<br>03060678 A2 | 17-03-2004<br>24-07-2003 |
| US 2002029352 | A1 | 07-03-2002 | NONE | | |

EPO FORM P0459

For more details about this annex : see Official Journal of the European Patent Office, No. 12/82